# EUROPEAN PATENT SPECIFICATION

(11) **EP 2 425 509 B1**
(45) Date of publication and mention of the grant of the patent: **31.05.2017**
(21) Application number: 10770439.7
(22) Date of filing: 30.04.2010
(51) Int. Cl.: H02G 15/02, H01R 13/53, H01R 43/18

(54) **COLD-SHRINK SEPARABLE CONNECTOR**
DURCH KÄLTESCHRUMPFUNG LÖSLICHER STECKER
CONNECTEUR SÉPARABLE POUR MONTAGE À FROID

(30) Priority: 01.05.2009 US 174632 P
(43) Date of publication of application: 07.03.2012
(73) Proprietor: 3M Innovative Properties Company, St. Paul, MN 55133-3427 (US)
(72) Inventor: NGUYEN, Nga K., Saint Paul, Minnesota 55133-3427 (US); TAYLOR, William L., Saint Paul, Minnesota 55133-3427 (US); WENTZEL, Carl J., Saint Paul, Minnesota 55133-3427 (US); SCHUBERT, Robert J., Saint Paul, Minnesota 55133-3427 (US)
(74) Representative: Isarpatent
(86) International application number: PCT/US2010/033221
(87) International publication number: WO 2010/127281

(56) References cited:
- WO-A1-2009/035859
- US-A- 5 925 852
- US-A1- 2005 227 522
- US-A1- 2008 156 528
- US-B1- 7 304 242

## Description

### TECHNICAL FIELD

This invention relates to a cold-shrink cable termination system.

### BACKGROUND

A cable termination system typically includes a cable terminated with a metallic lug (i.e., cable connector), the cable connector and end portion of the cable being inserted into the housing of a connecting device, the cable connector being connected to a mating device within the confines of the housing. The housing needs to form a tight seal around the end portion of the cable to prevent contamination or corrosion of the connection. A problem that arises with cable termination systems is that the internal diameter of the housing has to be adapted to the diameter of the cable. Cable sizes vary so it's necessary to have either several connecting devices of different sizes, each being designed to fit exactly the diameter of the particular cable, or several adapters of different thicknesses, each adapter enabling the housing to be adapted to a cable of a given diameter. These solutions are costly because they require a large number of connecting devices or adapters to adapt to a whole range of cables.

Another known solution is to provide a cold-shrink housing that can be expanded over almost its entire length to receive cables having a range of diameters. When a cold-shrink housing is used, a removable support core is placed within a portion of the housing. The removable support core has an outer diameter that is larger than the inner diameter of the housing portion when it is in a relaxed state. The removable support core holds the housing in an expanded state until the cable end and lug are inserted into the housing. The core is then removed, allowing the cold shrink housing to tighten around the cable.

A problem with the cold-shrink cable termination system is that the end of the removable support core placed within the housing cannot withstand the excessive pressure placed upon them by the expanded housing and will often collapse. Prior art references have sought to address this problem by reinforcing the ends of the removable support core. Examples of prior art references include WO 2009/035859 A1, US 2008/0156528 A1 and US 2005/0227522 A1.

### SUMMARY

The present invention seeks to address the issue of core collapse caused by the excessive pressure of an expanded housing. However, unlike prior art solutions, the present invention focuses on the housing rather than the core. The present invention provides an article as recited in claim 1. Preferred features are recited in the dependent claims.

The present invention features a novel article comprising a cold-shrink housing having a first chamber that intersects with a second chamber, the first chamber having a generally cylindrical shape with an upper portion nearest the second chamber, the upper portion having a diameter greater than the diameter of the remainder of the first chamber.

An advantage of at least one embodiment of the present invention is that it reduces the amount of pressure exerted on an end of a cold-shrink support core inserted furthest into a connecting device housing, thereby reducing the likelihood of core collapse.

Another advantage of at least one embodiment of the present invention is that the semi-conductive layer on the interior of the first chamber of the connecting device makes intimate contact with the cable connector.

An advantage of at least one embodiment of the present invention is that the outer semi-conductive layer provides an integrated ground because it makes contact with the cable metallic ground layer.

An advantage of at least one embodiment of the present invention is that the cold-shrink connecting device eliminates the need for a cable adapter. This eliminates an electrical interface, which can fail.

The above summary of the present invention is not intended to describe each disclosed embodiment or every implementation of the present invention. The Figures and detailed description that follow below more particularly exemplify illustrative embodiments.

### BRIEF DESCRIPTION OF DRAWINGS

- Fig. 1: depicts a typical cable assembly suitable for use with the present invention.
- Fig. 2: depicts an embodiment of the connecting device of the present invention.
- Fig. 3: depicts an embodiment of the connecting device of the present invention with a removable support core loaded in the connecting device.
- Fig. 4: depicts an embodiment of the connecting device of the present invention with a cable assembly in the connecting device.

### DETAILED DESCRIPTION

In the following detailed description of the preferred embodiments, reference is made to the accompanying drawings that form a part hereof. The accompanying drawings show, by way of illustration, specific embodiments in which the invention may be practiced. It is to be understood that other embodiments may be utilized, and structural or logical changes may be made without departing from the scope of the present invention. The following detailed description, therefore, is not to be taken in a limiting sense, and the scope of the invention is defined by the appended claims.

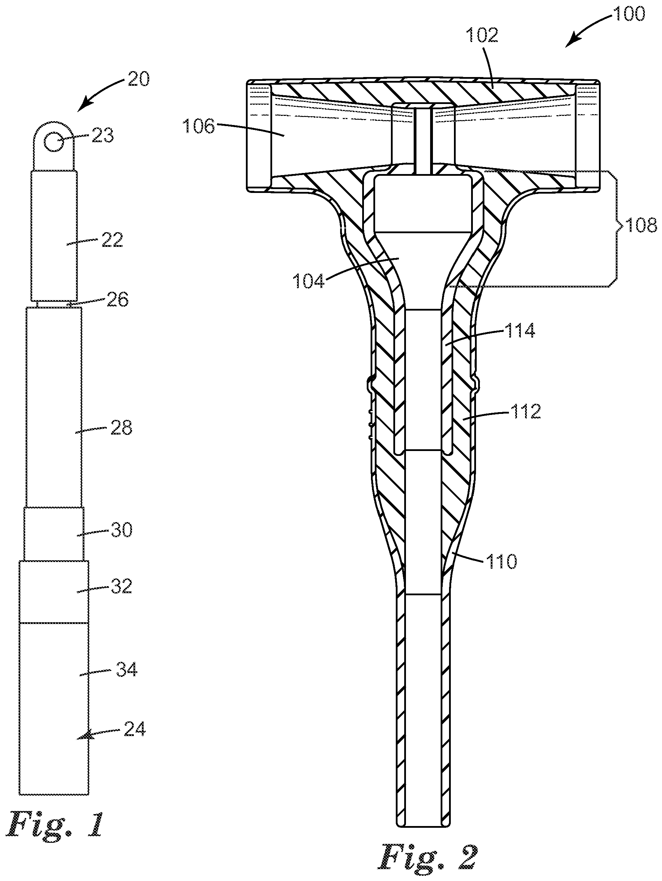

Fig. 1 shows a standard power cable assembly 20 which includes cable connector 22 attached to a cable 24. Cable 24 includes cable conductor 26 concentrically surrounded by cable insulation 28, cable insulation shield 30, cable metallic ground 32, and cable jacket 34. To form cable assembly 20, each of the cable insulation 28, cable insulation shield 30, cable metallic ground 32, and cable jacket 34 are stripped back from and end of cable 24 to expose a portion of the underlying layer, down to cable conductor 26. Cable connector 22 is then attached to the exposed portion of cable conductor 26 by any suitable means, typically by crimping.

Fig. 2 shows connecting device 100 which includes housing 102 that generally defines first chamber 104 and second chamber 106. First chamber 104 and second chamber 106 intersect such that the interior of first chamber 104 is in communication with the interior of second chamber 106. First and second chambers 104,106 may intersect to form a general T-shape as shown in Fig. 2 or a general L-shape (not shown). First chamber 104 further includes an upper portion 108 located nearest to second chamber 106. As can be seen in Fig. 2, the inner and outer diameter of upper portion 108 of chamber 104 are larger than the inner and outer diameters of the remainder of first chamber 104. Housing 102 may further include an outer semi-conductive layer 110 and an intermediate insulating layer 112, with the interior wall of first chamber 104 being at least partially covered by inner semi-conductive layer 114.

Housing 102 may be made from any material suitable for cold-shrink applications. Most suitable are materials such as a highly elastic rubber material that has a low permanent set, such as ethylene propylene diene monomer (EPDM), elastomeric silicone, or a hybrid thereof. The semi-conductive and insulating materials may be made of the same or different types of materials. The semi-conductive and insulating materials may have differing degrees of conductivity and insulation based on the inherent properties of the materials used or based on additives added to the materials.

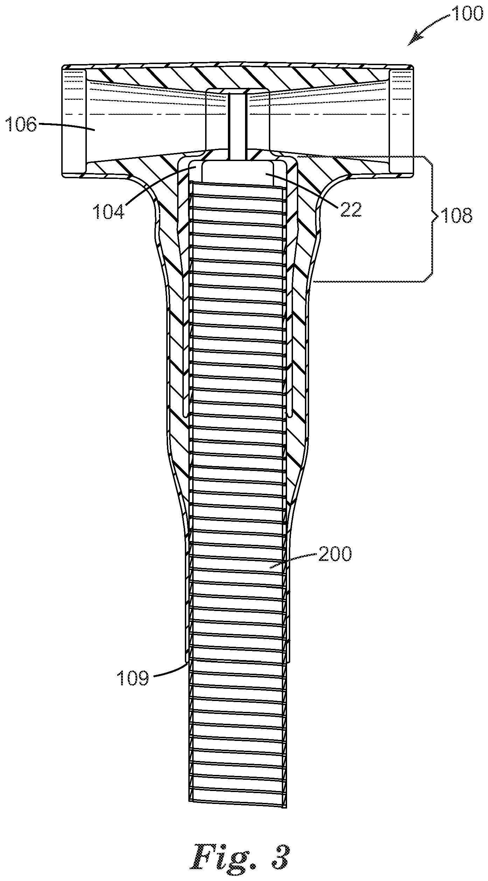

To enable cable assembly 20 to be inserted into first chamber 104 of connecting device 100, a removable support support core 200 is first loaded into first chamber 104, as illustrated in Fig. 3. Once loaded, removable support support core 200 typically extends from the end of the upper portion 108 nearest the second chamber 106 to beyond the open end 109 of first chamber 104 through which cable assembly 20 is inserted. When loaded into first chamber 104, removable support support core 200 radially expands first chamber 104 to an inner diameter greater than the outer diameter of the largest portion of cable assembly 20 that will be inserted into first chamber 104.

Removable support support core 200 may be made of any suitable material and in any suitable configuration, but typically consists of an extruded nylon or propylene ribbon that is helically wound. To remove removable support support core 200 from first chamber 104, removable support support core is unraveled by pulling on a tab (not shown) extending from one end of the removable support support core 200 and causing separation of the core along the helical score line. Preferably, removable support core 200 is unraveled starting with the end in upper portion 108 nearest the second chamber 106 and ending with the end that extends beyond the open end 109 of first chamber 104. Unraveling removable support support core 200 in this manner prevent the open end 109 of first chamber 104 from prematurely collapsing and obstructing the removal of removable support support core 200.

When an end of a removable support support core is located in the interior of a chamber as in the present invention, it is possible that the pressure exerted by the expanded chamber on the end of the core in the chamber will cause the end of the removable support support core to collapse. The present invention addresses this issue by providing an upper portion 108 of the first chamber that has a larger inner and outer diameter than the remainder of the chamber. With this feature, the upper portion 108 of the first chamber is required to expand less than in a prior art connector devices not having this feature, and therefore, less pressure is exerted upon the end of the removable support core in the interior of the chamber, compared to similar prior art connector devices.

Preferably the inner diameter of the upper portion 108 of first chamber 104 is of a size in comparison to the outer diameter of a removable support core 200 inserted into first chamber 104 such that the maximum increase in the inner diameter of the upper portion 108 when removable support core 200 is loaded within first chamber 104 is less than 100%, and more preferably equal to or less than about 20% and greater than 0%, of the inner diameter absent removable support core 200 in first chamber 104.

The difference in inner diameter of the upper portion 108 and remainder of first chamber 104 will typically cause the upper portion 108 and the remainder of the first chamber to experience a differential increase in inner diameter when a removable support core is loaded into the first chamber. In other words, the inner diameter of the upper portion 108 will be required to increase less than the inner diameter of the remainder of the first chamber to accommodate a removable support core 200. This is particularly true when the removable support core 200 has a constant outer diameter, but may also be true when the removable support core has a tapered or stepped shape. Regardless of the shape of the removable support core 200, it is desirable that the outer diameter of the removable support core 200 is larger than the inner diameters of both the upper portion and the remainder of the first chamber in its relaxed state so that inner surface of the first chamber 104 exerts at least a sufficient amount of pressure on the removable support core 200 to keep it from dislodging from the first chamber 104. If the outer diameter of the removable support core 200 varies along its length, as with a tapered or stepped core, preferably the outer diameter of each portion of the removable support core 200 is greater than the inner diameter of the adjacent portion of the first chamber 104.

Preferably, the maximum increase in the inner diameter of the upper portion when a removable support core is loaded within the first chamber is between about 100% and about, but greater than, 0% of the inner diameter absent the removable support core in the first chamber and the maximum increase in the inner diameter of the remainder of the first chamber when a removable support core is loaded within the first chamber is between about 150% and about 300% of the inner diameter absent the removable support core in the first chamber.

Once the removable support core has been loaded into the first chamber 104, cable assembly 20 may be inserted into first chamber 104. Typically, cable connector 22 will include an aperture 23 at its free end. The free end is positioned in the intersection of the first and second chambers, 104, 106 with the remainder of the cable connector residing in the upper portion, and an adjacent portion of chamber, of first chamber 104. Once the cable assembly is correctly positioned, a stud (not shown) may be inserted through aperture 23 and one or more mating devices 42 may be inserted into second chamber 106 and attached to, or held in position against, cable connector 22 by the stud. Removable support core 200 may then be removed as described above to cause first chamber 104 to contract and form a tight seal around cable assembly 20.

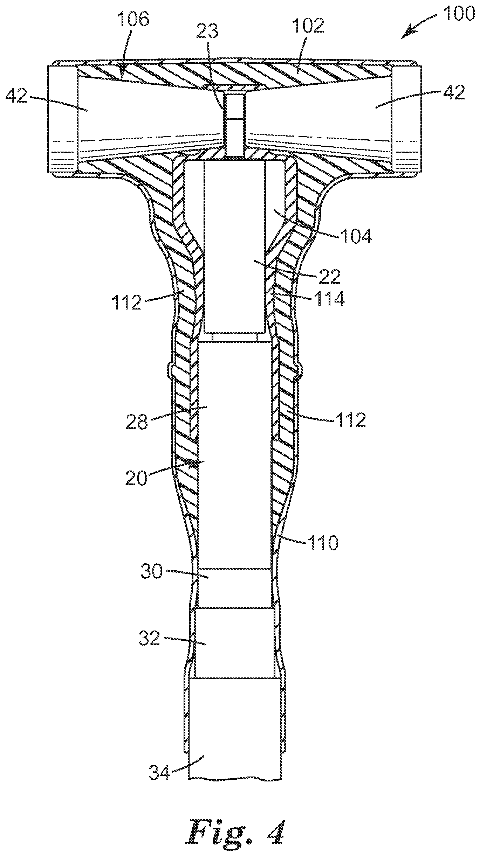

As shown in Fig. 4, when the connecting device has been fully assembled, the inner semi-conducting layer 114 on the interior wall of the first chamber 104 of the housing 102 makes intimate contact with the cable connector 22 of cable assembly 20. Preferably, the inner semi-conducting layer 114 also makes intimate contact with the cable insulation 28 of cable assembly 20. A portion of the interior wall of first chamber 104 is made of the intermediate insulating layer 112. This portion preferably makes intimate contact with cable insulation 28. A portion of the interior wall of first chamber 104 is made of outer semi-conducting layer 110. This portion preferably makes intimate contact with cable insulation shield 30, and typically also makes intimate contact with cable metallic ground 32, which may be a tape or wire layer. The portion of the interior wall of first chamber 104 made of the outer semi-conducting layer 110 preferably also makes intimate contact with a portion of cable jacket 34 to prevent contaminants and/or moisture from entering the first chamber 104.

Although specific embodiments have been illustrated and described herein for purposes of description of the preferred embodiment, it will be appreciated by those of ordinary skill in the art that a wide variety of alternate and/or equivalent implementations may be substituted for the specific embodiments shown and described without departing from the scope of the present invention. This application is intended to cover any adaptations or variations of the preferred embodiments discussed herein. Therefore, it is manifestly intended that this invention be limited only by the claims and the equivalents thereof.

## Claims

1. An article (100) comprising:
a cold-shrink housing (102) having a first chamber (104) that intersects with a second chamber (106),
the first chamber (104) having a generally cylindrical shape with an upper portion (108) nearest the second chamber (106), the upper portion (108) having a diameter greater than the diameter of the remainder of the first chamber;
**characterized in that** it further comprises
a removable support core (200) loaded into the first chamber (104), wherein an upper portion of the removable support core (200) is disposed within the upper portion (108) of the first chamber (104) nearest the second chamber.

2. The article (100) of claim 1 wherein the first chamber (104) and second chamber (106) intersect to form an L-shaped opening.

3. The article (100) of claim 1 wherein the first chamber (104) and second chamber (106) intersect to form a T-shaped opening.

4. The article (100) of claim 1 wherein the maximum increase in the inner diameter of the upper portion (108) when the removable support core (200) is loaded within the first chamber (104) is less than 100% of the inner diameter in the absence of the removable support core (200) in the first chamber (104).

5. The article (100) of claim 4 wherein the maximum increase in the inner diameter of the upper portion (108) when the removable support core (200) is loaded within the first chamber (104) is equal to or less than about 20% and greater than 0% of the inner diameter in the absence of the removable support core (200) in the first chamber (104).

6. The article (100) of claim 1 wherein the upper portion (108) of the first chamber (104) and the remainder of the first chamber experience a differential increase in inner diameter when the removable support core (200) is loaded into the first chamber (104).

7. The article (100) of claim 6 wherein the maximum increase in the inner diameter of the upper portion when a removable support core is loaded within the first chamber is between about 100% and about, but greater than, 0% of the inner diameter in the absence of the removable support core in the first chamber and the maximum increase in the inner diameter of the remainder of the first chamber when a removable support core is loaded within the first chamber is between about 150% and about 300% of the inner diameter in the absence of the removable support core in the first chamber

8. The article (100) of claim 1 wherein the outer diameter of the removable support core (200) is larger than the inner diameters of both the upper portion (108) and the remainder of the first chamber (104) in its relaxed state.

9. The article (100) of claim 1 wherein the portion of the housing (102) surrounding the first chamber (104) comprises an outer semi-conductive layer (110), an intermediate insulating layer (112) and an inner semi-conductive layer (114).

10. The article (100) of claim 8 further comprising a cable assembly (20) in the first chamber (104) of the housing (102) wherein the inner semi-conducting layer (114) of the housing (102) makes intimate contact with a connector portion (22) of the cable assembly (20).

11. The article (100) of claim 10 wherein the inner semi-conducting layer (114) of the housing (102) further makes intimate contact with a cable insulation portion (28) of the cable assembly (20).

12. The article (100) of claim 8 wherein the outer semi-conducting layer (110) of the housing (102) makes intimate contact with an insulation shield portion (30) of the cable assembly (20).

13. The article (100) of claim 1 wherein each of the outer semi-conductive layer (110), intermediate insulating layer (112), and inner semi-conductive layer (114) comprise an elastomeric silicone.

14. The article (100) of claim 10 wherein the outer conducting layer (110) further makes intimate contact with a metallic ground (32) of the cable assembly (20) at the open end of the first chamber (104).

15. The article (100) of claim 14 wherein metallic ground (32) is a tape or wire layer.

## Patentansprüche

1. Gegenstand (100), umfassend:
ein Kaltschrumpfgehäuse (102) mit einer ersten Kammer (104), die sich mit einer zweiten Kammer (106) überschneidet,
wobei die erste Kammer (104) eine im Allgemeinen zylindrische Form mit einem der zweiten Kammer (106) am nächsten liegenden, oberen Abschnitt (108) aufweist, wobei der obere Abschnitt (108) einen Durchmesser aufweist, der größer ist als der Durchmesser des Rests der ersten Kammer;
**dadurch gekennzeichnet, dass** er ferner umfasst
einen entfernbaren Stützkern (200), der in die erste Kammer (104) eingebracht ist, wobei ein oberer Abschnitt des entfernbaren Stützkerns (200) innerhalb des der zweiten Kammer am nächsten liegenden, oberen Abschnitts (108) der ersten Kammer (104) angeordnet ist.

2. Gegenstand (100) nach Anspruch 1, wobei die erste Kammer (104) und die zweite Kammer (106) sich überschneiden, um eine L-förmige Öffnung zu bilden.

3. Gegenstand (100) nach Anspruch 1, wobei die erste Kammer (104) und die zweite Kammer (106) sich überschneiden, um eine T-förmige Öffnung zu bilden.

4. Gegenstand (100) nach Anspruch 1, wobei die maximale Zunahme des Innendurchmessers des oberen Abschnitts (108), wenn der entfernbare Stützkern (200) in die erste Kammer (104) eingebracht wird, weniger als 100 % des Innendurchmessers bei Abwesenheit des entfernbaren Stützkerns (200) in der ersten Kammer (104) beträgt.

5. Gegenstand (100) nach Anspruch 4, wobei die maximale Zunahme des Innendurchmessers des oberen Abschnitts (108), wenn der entfernbare Stützkern (200) in die erste Kammer (104) eingebracht wird, gleich oder weniger als etwa 20 % und mehr als 0 % des Innendurchmessers bei Abwesenheit des entfernbaren Stützkerns (200) in der ersten Kammer (104) beträgt.

6. Gegenstand (100) nach Anspruch 1, wobei der obere Abschnitt (108) der ersten Kammer (104) und der Rest der ersten Kammer eine differentielle Zunahme des Innendurchmessers erfahren, wenn der entfernbare Stützkern (200) in die erste Kammer (104) eingebracht wird.

7. Gegenstand (100) nach Anspruch 6, wobei die maximale Zunahme des Innendurchmessers des oberen Abschnitts, wenn ein entfernbarer Stützkern in die erste Kammer eingebracht wird, zwischen etwa 100 % und etwa, jedoch größer als, 0 % des Innendurchmessers bei Abwesenheit des entfernbaren Stützkerns in der ersten Kammer beträgt, und die maximale Zunahme des Innendurchmessers des Rests der ersten Kammer, wenn ein entfernbarer Stützkern in die erste Kammer eingebracht wird, zwischen etwa 150 % und etwa 300 % des Innendurchmessers bei Abwesenheit des entfernbaren Stützkerns in der ersten Kammer beträgt.

8. Gegenstand (100) nach Anspruch 1, wobei der Außendurchmesser des entfernbaren Stützkerns (200) in dessen entspanntem Zustand größer ist als die Innendurchmesser sowohl des oberen Abschnitts (108) als auch des Rests der ersten Kammer (104).

9. Gegenstand (100) nach Anspruch 1, wobei der Abschnitt des Gehäuses (102), der die erste Kammer (104) umgibt, eine äußere halbleitende Schicht (110), eine Zwischenisolierschicht (112) und eine innere halbleitende Schicht (114) umfasst.

10. Gegenstand (100) nach Anspruch 8, ferner umfassend eine Kabelanordnung (20) in der ersten Kammer (104) des Gehäuses (102), wobei die innere halbleitende Schicht (114) des Gehäuses (102) in engem Kontakt mit einem Verbinderabschnitt (22) der Kabelanordnung (20) steht.

11. Gegenstand (100) nach Anspruch 10, wobei die innere halbleitende Schicht (114) des Gehäuses (102) ferner in engem Kontakt mit einem Kabelisolierabschnitt (28) der Kabelanordnung (20) steht.

12. Gegenstand (100) nach Anspruch 8, wobei die äußere halbleitende Schicht (110) des Gehäuses (102) in engem Kontakt mit einem Isolierabschirmabschnitt (30) der Kabelanordnung (20) steht.

13. Gegenstand (100) nach Anspruch 1, wobei jede der äußeren halbleitenden Schicht (110), der Zwischenisolierschicht (112) und der inneren halbleitenden Schicht (114) ein elastomeres Silikon umfasst.

14. Gegenstand (100) nach Anspruch 10, wobei die äußere halbleitende Schicht (110) ferner in engem Kontakt mit einer metallischen Masse (32) der Kabelanordnung (20) am offenen Ende der ersten Kammer (104) steht.

15. Gegenstand (100) nach Anspruch 14, wobei die metallische Masse (32) eine Band- oder Drahtschicht ist.

## Revendications

1. Article (100) comprenant :
une enceinte rétractable à froid (102) possédant une première chambre (104) qui est sécante à une seconde chambre (106),
la première chambre (104) ayant une forme généralement cylindrique avec une partie (108) située le plus près de la seconde chambre (106), la partie supérieure (108) ayant un diamètre supérieur au diamètre du reste de la première chambre ;
**caractérisé par le fait qu'**il comprenne en outre
une âme de soutien amovible (200) insérée dans la première chambre (104), une partie supérieure de l'âme de soutien amovible (200) étant disposée à l'intérieur de la partie supérieure (108) de la première chambre (104) située le plus près de la seconde chambre.

2. Article (100) selon la revendication 1 dans lequel la première chambre (104) et la seconde chambre (106) sont sécantes pour former une ouverture en forme de L.

3. Article (100) selon la revendication 1 dans lequel la première chambre (104) et la seconde chambre (106) sont sécantes pour former une ouverture en forme de T.

4. Article selon la revendication (100) selon la revendication 1 dans lequel l'augmentation maximale du diamètre intérieur de la partie supérieure (108) lorsque l'âme de soutien amovible (200) est insérée à l'intérieur de la première chambre (104) est inférieure à 100 % du diamètre intérieur en l'absence de l'âme de soutien amovible (200) dans la première chambre (104).

5. Article (100) selon la revendication 4 dans lequel l'augmentation maximale du diamètre intérieur de la partie supérieure (108) lorsque l'âme de soutien amovible (200) est insérée à l'intérieur de la première chambre (104) est inférieure ou égale à environ 20 % et supérieure à 0 % du diamètre intérieur en l'absence de l'âme de soutien amovible (200) dans la première chambre (104).

6. Article (100) selon la revendication 1 dans lequel la partie supérieure (108) de la première chambre (104) et le reste de la première chambre subissent une augmentation différentielle de diamètre intérieur lorsque l'âme de soutien amovible (200) est insérée dans la première chambre (104).

7. Article (100) selon la revendication 6 dans lequel l'augmentation maximale du diamètre intérieur de la partie supérieure lorsqu'une âme de soutien amovible est insérée à l'intérieur de la première chambre est entre environ 100 % et environ, mais supérieur, à 0 % du diamètre intérieur en l'absence de l'âme de soutien amovible dans la première chambre et l'augmentation maximale du diamètre intérieur du reste de la première chambre lorsqu'une âme de soutien amovible est insérée dans la première chambre est entre environ 150 % et environ 300 % du diamètre intérieur en l'absence de l'âme de soutien amovible dans la première chambre.

8. Article (100) selon la revendication 1 dans lequel le diamètre extérieur de l'âme de soutien amovible (200) est supérieur aux diamètres intérieurs de la partie supérieure (108) et du reste de la première chambre (104) dans son état exempt de tensions.

9. Article (100) selon la revendication 1 dans lequel la partie de l'enceinte (102) entourant la première chambre (104) comprend une couche semi-conductrice extérieure (110), une couche isolante intermédiaire (112) et une couche semi-conductrice intérieure (114).

10. Article (100) selon la revendication 8 comprenant en outre un ensemble de câble (20) dans la première chambre (104) de l'enceinte (102), la couche semi-conductrice intérieure (114) de l'enceinte (102) étant en contact étroit avec une partie de connexion (22) de l'ensemble de câble (20).

11. Article (100) selon la revendication 10 dans lequel la couche semi-conductrice intérieure (114) de l'enceinte (102) est également en contact étroit avec une partie d'isolement de câble (28) de l'ensemble de câble (20).

12. Article (100) selon la revendication 8 dans lequel la couche semi-conductrice extérieure (110) de l'enceinte (102) est en contact étroit avec une partie de blindage d'isolement (30) de l'ensemble de câble (20).

13. Article (100) selon la revendication 1 dans lequel chaque couche parmi la couche semi-conductrice extérieure (110), la couche isolante intermédiaire (112) et la couche semi-conductrice intérieure (114) comprend une silicone élastomère.

14. Article (100) selon la revendication 10 dans lequel la couche semi-conductrice extérieure (110) est également en contact étroit avec une terre métallique (32) de l'ensemble de câble (20) au niveau de l'extrémité ouverte de la première chambre (104).

15. Article (100) selon la revendication 14 dans lequel la terre métallique (32) est une couche de bande ou de fils.
